Europäisches Patentamt

European Patent Office

Office européen des brevets

(11) Veröffentlichungsnummer : **0 347 537 B1**

# (12) EUROPÄISCHE PATENTSCHRIFT

(45) Veröffentlichungstag der Patentschrift :
22.01.92 Patentblatt 92/04

(51) Int. Cl.⁵ : **B60J 5/04**

(21) Anmeldenummer : **89106317.4**

(22) Anmeldetag : **10.04.89**

(54) **Fahrzeugtür mit Fensterrahmen.**

(30) Priorität : **03.05.88 DE 3814918**

(43) Veröffentlichungstag der Anmeldung :
**27.12.89 Patentblatt 89/52**

(45) Bekanntmachung des Hinweises auf die
Patenterteilung :
**22.01.92 Patentblatt 92/04**

(84) Benannte Vertragsstaaten :
**DE ES FR GB IT SE**

(56) Entgegenhaltungen :
**DE-A- 2 448 855**
**FR-A- 2 543 250**
**GB-A- 2 133 461**
**US-A- 2 737 412**
**US-A- 2 813 748**

(73) Patentinhaber : **Bayerische Motoren Werke
Aktiengesellschaft
Patentabteilung AJ-30 Postfach 40 02 40
Petuelring 130
W-8000 München 40 (DE)**

(72) Erfinder : **Ball, Wilried
Breslauerstrasse 24
W-8312 Dingolfing (DE)**
Erfinder : **Wurtz, Richard
Oberanger 17
W-8061 Grossinzemoos (DE)**

Jouve, 18, rue Saint-Denis, 75001 PARIS

**Beschreibung**

Mit steigendem Bedürfnis nach Lärmverminderung und zunehmender Fahrgeschwindigkeit, welche einen erhöhten Sog außenauf die Fensterscheibe bewirkt, werden an die Dichtung zwischen Fahrzeugtür und Seitenrahmen immer höhere Anforderungen gestellt. Zu diesem Zweck werden z.B. zwei Dichtlippen an der Fahrzeugtür vorgesehen, wobei die eine innen und die andere außen am Seitenrahmen anliegt. Je besser die Dichtung ist, umso größer ist aber der Dichtungsdruck und damit die zum Schließen der Tür notwendige Kraft. Um die Dichtung zu verbessern, ist es auch bekannt, die außen an dem Türrahmen anliegende Dichtlippe sehr breit auszubilden. Dies hat jedoch ein optisch plumpes Aussehen zur Folge.

Ferner ist es bekannt, die Fensterscheibe absenkbar auszubilden, wobei sie beim Schließen der Tür in eine Nut im Dachbereich des Seitenrahmens eingreift (siehe z.B. die Figuren 2 und 7 der US-A-2,813,748). Durch eine absenkbare Fensterscheibe wird jedoch die Steifigkeit der Tür vermindert. Vor allem aber ist bei Ausfall der meist elektrisch betätigten Absenkeinrichtung oder des Türgriffs, durch den diese Absenkeinrichtung betätigt wird, eine mit einer solchen absenkbaren Fensterscheibe versehene Tür nicht oder nur sehr schwer zu öffnen. Auch muß durch den Eingriff der Fensterscheibe in die Nut im Seitenrahmen die Fensterscheibe relativ weit innen angeordnet werden, wodurch die Luftwiderstandszahl ($c_W$-wert) ungünstig beeinflußt wird.

Aufgabe der Erfindung ist es daher, eine dichte, leicht schließbare Fahrzeugtür bereitzustellen, die bei hoher Steifigkeit und niedrigem $c_W$-Wert sich jederzeit problemlos öffnen läßt.

Dies wird erfindungsgemäß durch die im Anspruch 1 gekennzeichnete Fahrzeugtür erreicht. In den Unteransprüchen sind vorteilhafte Ausgestaltungen der Erfindung wiedergegeben.

Bei der erfindungsgemäßen Fahrzeugtür bleibt der Fensterrahmen und damit die Steifigkeit der Tür erhalten. Bei Ausfall der Einrichtung zum Heben und Senken des Support-Rahmens läßt sich die Tür durch Ziehen am Türgriff von außen oder durch Gegendruck von innen dennoch öffnen, weil der Druck, der auf die Dichtung ausgeübt wird bzw. bei zwischen Dach und Support-Rahmen von außen nach innen ansteigender Dichtfläche die dadurch gebildete Hinterschneidung nur geringfügig klemmt.

Ferner kann bei der erfindungsgemäßen Fahrzeugtür die Fensterscheibe fast plan mit der Dachaußenhaut verlaufen, so daß ein günstiger $c_W$-Wert erreichbar ist. Zugleich wird ein eleganter, schmaler und fugenloser Übergang von der Tür zum Dachbereich sichergestellt.

Nachstehend ist die Erfindung anhand der Zeichnung näher erläutert. Darin zeigen

| | |
|---|---|
| Fig. 1 | einen Schnitt durch den oberen, dem Dach benachbarten Bereich einer Fahrzeugtür mit dem Support-Rahmen in der Schließstellung, |
| Fig. 2 | einen der Fig. 1 entsprechenden Schnitt, jedoch mit abgesenktem Support-Rahmen und einer mechanische Einrichtung zum Absenken des Support-Rahmens zum Öffnen der Tür ; |
| Fig. 3 | eine Seitenansicht einer Fahrzeugtür in Schließstellung des Support-Rahmens ; |
| Fig. 4 | eine der Fig. 3 entsprechende Ansicht, jedoch mit abgesenktem Support-Rahmen und abgesenkter Fensterscheibe ; |
| Fig. 5 | eine Ansicht der Gleitelemente zur Führung des Supportrahmens am Fensterrahmen ; |
| Fig. 6 und 7 | den Schnitt entlang der Linie A-A in Fig. 5, und zwar von zwei Varianten des Führungsbolzens ; |
| Fig. 8 | einen der Fig. 1 entsprechenden Schnitt, jedoch von einer anderen Ausführungsform der Fahrzeugtür ; |
| Fig. 9 | einen der Fig. 8 entsprechenden Schnitt, jedoch mit abgesenktem Support-Rahmen ; |
| Fig. 10 | einen Schnitt entsprechend der Fig. 8, jedoch von wieder einer anderen Ausführungsform der Fahrzeugtür ; |
| Fig. 11 bis 13 | eine Draufsicht auf eine Verzahnung am Support-Rahmen, einen Anschlag bzw. ein Gegenstück für den Anschlag von der Ausführungsform nach Fig. 10. |

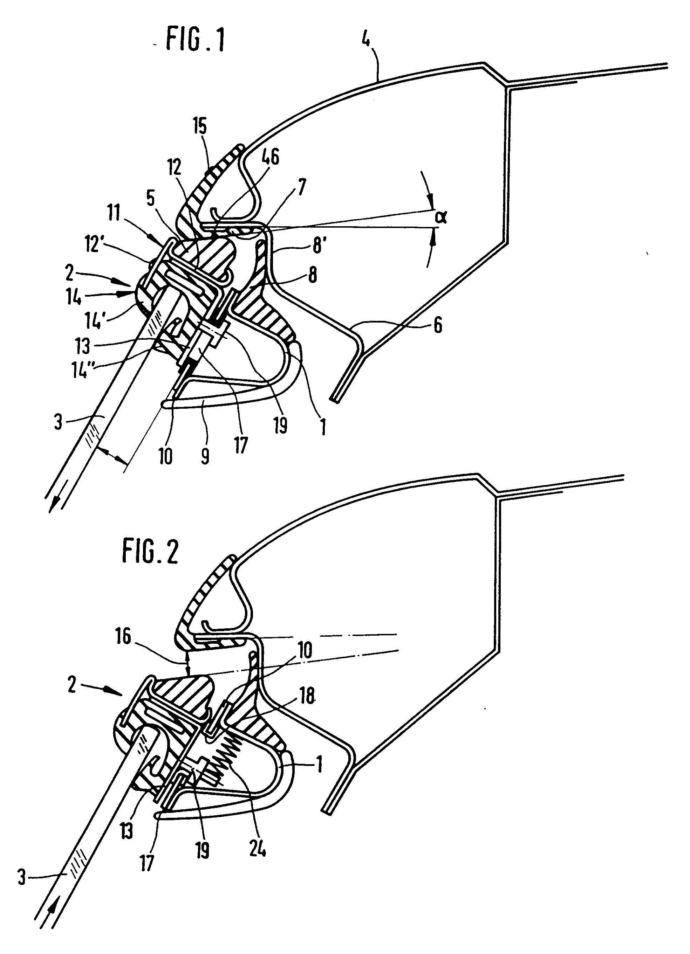

Gemäß Fig. 1 weist eine Fahrzeugtür einen Fensterrahmen 1 auf, an dem außen ein Support-Rahmen 2 auf und ab verschiebbar geführt ist. In dem Support-Rahmen 2 ist die Fensterscheibe 3 auf und ab bewegbar geführt. Weiterhin ist zwischen dem Support-Rahmen 2 und dem Dach 4 des Fahrzeugs eine Dichtung vorgesehen, die durch ein Dichtprofil 5 an der oberen Kante des Support-Rahmens 2 gebildet wird, welches gegen ein an der unteren Kante des Dachs 4 bzw. an dem äußeren Bereich des Seiten- rahmens 6 unterhalb der Dachaußenhaut angeordnetes Dichtprofil 7 drückt. Diese Stellung, in der der Supportrahmen 2 gegen das Dach 4 gedrückt wird, wird als fahrbereiter Zustand oder Schließstellung des Support-Rahmens 2 bezeichnet.

Der Fensterrahmen 1 weist an seiner Oberseite eine lippenförmige Dichtung 8 auf, die an einem von innen nach außen von unten nach oben verlaufenden Abschnitt 8' des Seitenrahmens 6 drückt. Ferner sind Verkleidungsteile 9 seitlich und an der Unterseite des Fensterrahmens 1 befestigt. Auf der dem Supportrahmen 2 zugewandten Seite ist der Fensterrahmen 1 mit einer Wandung 10 in Form eines Schließblechs verschlossen, welche parallel zur Fensterscheibe 3 verläuft.

Der Support-Rahmen 2 besteht aus einem Blechteil 11 mit einem senkrecht zur Fensterscheibe 3 verlaufenden Mittelteil 12, von dem sich außen eine parallel zur Fensterscheibe 3 verlaufende Blende 12′ und innen ein parallel zur Fensterscheibe 3 verlaufender Flansch 13 nach unten erstreckt. Das Blechteil 11 umschließt ein Führungsprofil 14 mit Dichtlippen 14′, 14″ aus elastischem Material, in dem die Fensterscheibe 3 geführt wird. An der Oberseite des Mittelteils 12 des Blechteils 11 ist das keilförmige Dichtprofil 5 eingeklemmt.

Die Außenseite bzw. die Blende 12′ des Supportrahmens 2 fluchtet mit der daran anschließenden Dachkontur, d.h. in Fig. 1 mit dem außen am Dach angeordneten Punktnahtverkleidungsabschnitt 15 des Dichtprofils 7.

Als Führung zum Auf- und Abbewegen des Support-Rahmens 2 gegenüber dem Fensterrahmen 1 von der in Fig. 1 dargestellten Schließstellung, in der der Supportrahmen 2 an das Dach 4 gedrückt wird, in die in Fig. 2 dargestellte Stellung zum Öffnen der Tür, in der der Supportrahmen 2 gegenüber dem Fensterrahmen 1 unter Bildung einer Fuge 16 zwischen dem Dichtprofil 5 und dem Dichtprofil 7 abgesenkt ist, sind Gleitelemente am Supportrahmen 2 vorgesehen.

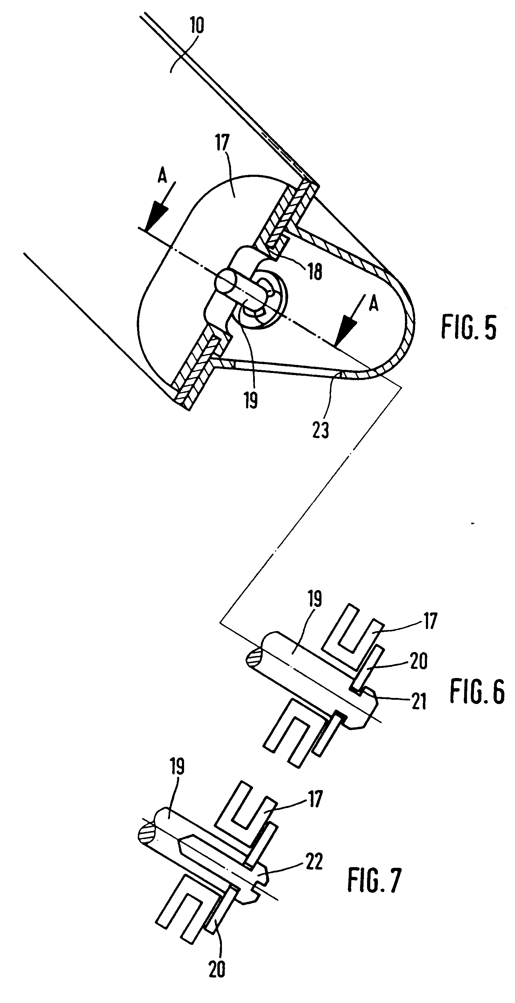

Wie insbesondere aus Fig. 5 bis 7 ersichtlich, bestehen die Gleitelemente aus einer Verkleidung 17 um ein Langloch 18 in der Außenwandung 10 des Fensterrahmens 1. Die Verkleidung 17 besteht aus einem verschleißfesten Material und bildet eine Gleitfläche für den Supportrahmen 2. Ferner ist ein Führungsbolzen 19 vorgesehen, der an der dem Fensterrahmen 1 zugewandten Seite des Support-Rahmens 2, also am Flansch 13 befestigt ist (Fig. 2) und sich durch das mit der Verkleidung 17 versehene Langloch 18 in der Wandung 10 des Fensterrahmens 1 erstreckt.

Zur Befestigung des Support-Rahmens 2 an dem Fensterrahmen 1 ist jeder Führungsbolzen 19 mit einer Scheibe 20 an seinem freien Ende versehen, welche das jeweilige Langloch 18 an der vom Supportrahmen 2 abgewandten Seite der Wandung 10 übergreift.

Die Scheibe 20 kann dabei als ein in eine Ringnut 21 eingreifender Sprengring gemäß Fig. 6 ausgebildet sein oder gemäß Fig. 7 mit einer Schraube 22 fixiert sein. Zur Montage der Scheibe 10 ist in dem Fensterrahmen 1 im Bereich jedes Langlochs 18 eine Ausnehmung 23 vorgesehen, und zwar in dem Bereich, der durch die Verkleidungsteile 9 verdeckt wird.

Mit zunehmender Fahrgeschwindigkeit erhöht sich der Sogdruck, der außen auf die Fensterscheibe 3 wirkt. Um diesem Sog entgegenzuwirken, übergreift das Dach 4 mit dem Dichtprofil 7 das Dichtprofil 5 des Support-Rahmens 2. D.h. die Dichtfläche 46, also die Berührungsfläche zwischen den Dichtprofilen 5 und 7 steigt von außen nach innen an, wobei der Winkel alpha, der die Steigung der Dichtfläche 46 gegenüber der Ebene angibt, die senkrecht zur Drehachse der Tür steht, so bemessen wird, daß die Tür trotz des Hinterschnitts noch in Schließstellung geöffnet werden kann, falls die zum Absenken des Supportrahmens 2 vorgesehenen Einrichtungen ausfallen.

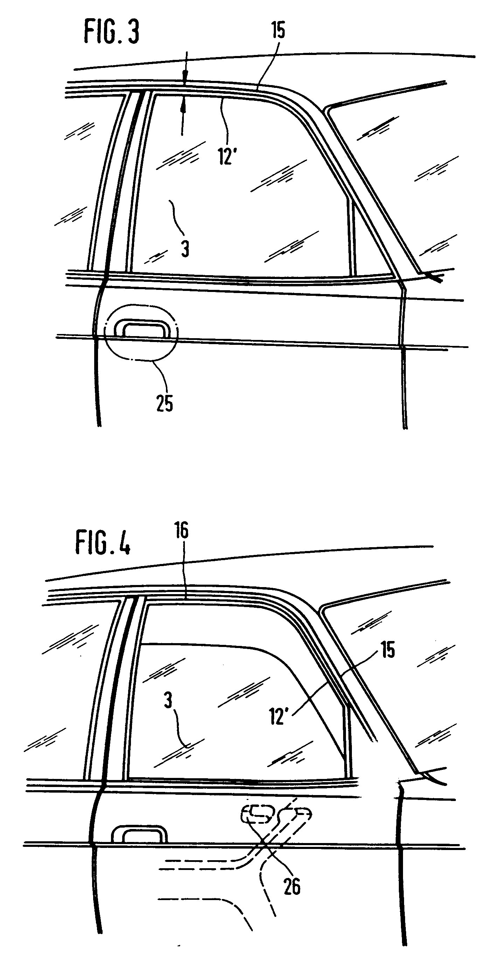

Das Absenken des Supportrahmens 2 kann z.B. mittels eines elektromechanischen Fensterhebers für die Fensterscheibe 3 erfolgen, welcher zum Öffnen der Tür bis in Höhe der Fuge 16 zugleich den Support-Rahmen 2 und die Fensterscheibe 3 absenkt (Fig. 2) und dann z.B. über eine Rutschkupplung nur noch die Fensterscheibe 3 (Fig. 4) mitnimmt.

Stattdessen kann, wie in Fig. 2 dargestellt, eine rein mechanische Einrichtung zum Absenken des Support-Rahmens 2 vorgesehen sein. Dazu ist der Support-Rahmen 2 gegenüber dem Fensterrahmen 1 nach unten belastet, und zwar durch eine Druckfeder 24, die sich einerseits am Führungsbolzen 19 und andererseits innen am Türrahmen 1 abstützt. D.h. der Supportrahmen 2 wird durch Betätigung der Fensterscheibe 3 betätigt.

Zum Öffnen der Tür wird bei dieser Version also der Supportrahmen 2 durch die Bewegung der Fensterscheibe 3 nach unten bis in die in Fig. 2 dargestellte Position unter Bildung der Fuge 16 mitgenommen. Wie in Fig. 4 gezeigt, entsteht bei dieser Version die Fuge 16 allerdings auch dann, wenn während der Fahrt die Fensterscheibe 3 geöffnet wird. Dies ist jedoch kein wesentlicher Nachteil, da z.B. etwaige Windgeräusche in diesem Zustand in erster Linie durch die geöffnete Fensterscheibe entstehen. Das Heben des Supportrahmens 2 in die Schließstellung erfolgt bei dieser Version durch Bewegung der Fensterscheibe 3 nach oben.

Der Absenkvorgang des Support-Rahmens 2 zum Öffnen der Tür wird dabei sowohl bei der geschilderten elektromechanischen wie bei der in Fig. 2 dargestellten mechanischen Version vorzugsweise durch Betätigung des Außentürgriffs 25 oder des Innentürgriffs 26 ausgelöst.

Demgegenüber wird der Schließvorgang des Support-Rahmens 2 in die in Fig. 1 und 3 dargestellte Stellung vorzugsweise durch das Einschnappen des Türschlosses in dessen zweite Rastung ausgelöst.

Wie in Fig. 1 dargestellt, wird in Schließstellung des Supportrahmens 2 nicht nur ein fast fugenloser Übergang zwischen Dach 4 bzw. Punktnahtverkleidung 15 und Support-Rahmen 2 bzw. Blende 12′ hergestellt sondern außerdem, wie insbesondere aus Fig. 3 ersichtlich, ein Übergangsbereich aus Punktnahtverkleidung 15 und Blende 12' geschaffen, der relativ schmal und daher optisch ansprechend ist.

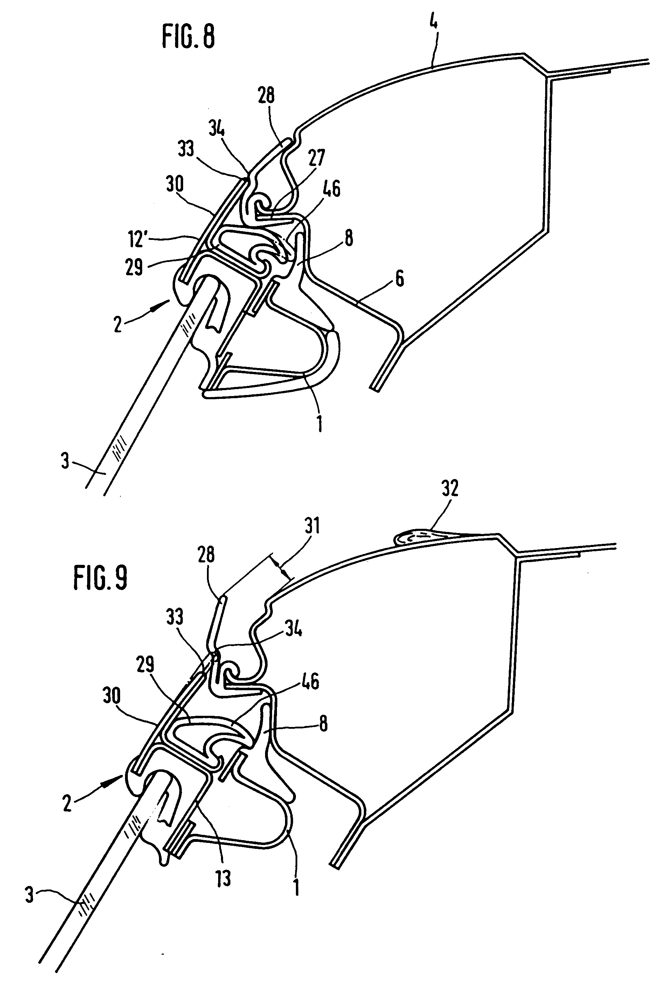

Die Ausführungsformen nach Fig. 8 bis 13 unterscheiden sich von der nach Fig. 1 bis 4 dadurch, daß eine während der Fahrt verschließbare Regenrinne vorgesehen ist.

D.h. auf die Kante 27, die durch Zusammenschweißen des Türrahmens 6 und des rinnenförmig ausgebildeten unteren Endes der Dachaußenhaut 4 gebildet wird, ist anstelle des Dichtprofils 7 ein Dachrinnenprofil 28 aus elastischem Material, z.B. Kunststoff, aufgeklipst. Ferner ist die Blende 12' an der Außenseite des Supportrahmens 2 mit einem sich über das Dichtungsprofil 29 hinaus erstreckenden Steg 30 versehen, der bei der in Fig. 8 dargestellten Schließstellung des Supportrahmens 2 das Dachrinnenprofil 28 gegen das Dach 4 drückt.

Bei der in Fig. 9 dargestellten abgesenkten Stellung des Supportrahmens 2 zum Öffnen der Tür ist der Steg 30 außer Eingriff mit dem Dachrinnenprofil 28, welches dadurch auffedert und durch die Öffnung 31 in der Lage ist, vom Dach abfließendes Wasser 32 aufzufangen. Wenn der Supportrahmen 2 nach oben bewegt wird, schiebt er somit mit der abgerundeten oberen Kante 33 des Steges 30 das Dachrinnenprofil 28 wieder in die gegen das Dach 4 gedrückte Position gemäß Fig. 8, in der die Regenrinne verschlossen ist.

Durch das Verschließen während der Fahrt werden somit durch die Regenrinne erzeugte Windgeräusche beseitigt. Beim Öffnen der Tür wird die Regenrinne hingegen geöffnet, so daß kein Wasser 32 die Sitzflächen benässen oder durch Eindringen zwischen Support-Rahmen 2 und Fensterrahmen 1 zu einer Verschmutzung und zu Verrostungen der als Gleitflächen dienenden Verkleidungen 17, der Führungsbolzen 19 und sonstiger Teile zwischen Fensterrahmen 1 und Supportrahmen 2 führen kann (vgl. Fig. 1 und 2).

Um eine formschlüssige äußere Kontur zwischen dem Steg 30 und dem Dachrinnenprofil 28 zu erreichen, ist im Dachrinnenprofil 28 eine Stufe 34 vorgesehen.

Da die Stufe 34 optisch deutlich hervortritt, ist es erforderlich, daß in der Schließstellung des Support-Rahmens 2 gemäß Fig. 8 die obere Kante 33 des Stegs 30 genau in die Stufe 34 eingreift.

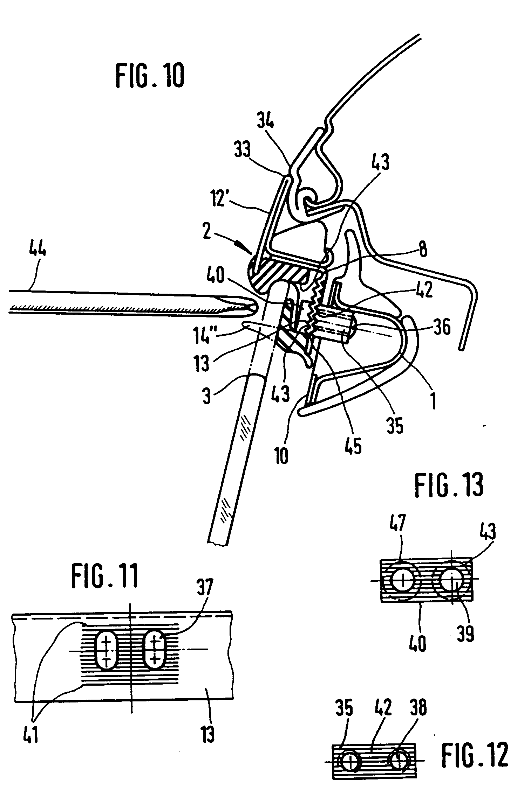

Dazu ist die Position der oberen Kante 33 des Stegs 30 in Schließstellung des Supportrahmens 2 einstellbar, und zwar mittels eines in Fig. 10 und 12 dargestellten Anschlags 35 am Supportrahmen 2, welcher im Fensterrahmen 1 angeordnet ist und an dessen oberem Abschnitt angreift. Im Bereich des Anschlags 35 ist dazu die Wandung 10 des Fensterrahmens 1 ausgespart.

Zur Befestigung des Anschlags 35 am Support-Rahmen 2 sind zwei als Senkschrauben ausgebildete Schraubbolzen 36 vorgesehen, die sich durch Langlöcher 37 erstrecken, die im Innenflansch 13 des Support-Rahmens 2 vorgesehen sind (Fig. 11). Die Senkschrauben 36 sind dabei einerseits in Gewindelöcher 38 im Anschlag 35 eingeschraubt (Fig. 12) und ragen auf der anderen Seite des Flansches 13 durch Bohrungen 39 eines Gegenstückes 40, wobei ihre Senkköpfe in in Fig. 13 gestrichelt dargestellten Vertiefungen 47 angeordnet sind. Auf diese Weise ist der Anschlag 35 am Flansch 13 höhenverstellbar festklemmbar.

Um die Senkschrauben 36 mit einem Schraubendreher 44 betätigen zu können, ist, wie in Fig. 10 dargestellt, das Führungsprofil 45 im Supportrahmen 2 bei dieser Ausführungsform im Bereich des Gegenstücks 40 ausgespart. Ferner erstreckt sich die Blende 12' vom Mittelteil 12 weniger weit nach unten als z.B. bei der Ausführungsform nach Fig. 1 und die Dichtlippe 14" ist bei abgesenkter Scheibe 3 von der Aussparung im Führungsprofil 45 weg biegbar.

Damit keine Verstellung des Anschlages 35 auftreten kann, wenn die Senkschrauben 36 nicht fest angezogen sind, ist in den Flansch 13 im Bereich der Langlöcher 37 eine Verzahnung 41 eingeprägt, welche mit entsprechenden Verzahnungen 42 bzw. 43 am Anschlag 35 und am Gegenstück 40 zusammenwirkt.

Bei der in Fig. 8 und 9 dargestellten Ausführungsform ist das Dichtprofil 29 als keilförmige Schlauchdichtung ausgebildet und mit einem lippenförmigen Abschnitt 46 versehen. Die Schlauchdichtung 29 ist dabei in Schließstellung des Support-Rahmens 2 aufblasbar, wodurch sich ihre hinterhakende Wirkung verstärkt. Zugleich drückt sie mit dem lippenförmigen Abschnitt 46 gegen die Dichtung 8 am Fensterrahmen 1, wodurch deren Dichtwirkung vergrößert wird.

## Patentansprüche

1. Fahrzeugtür mit Fensterrahmen, dadurch gekennzeichnet, daß die Fensterscheibe (3) in einem Support-Rahmen (2) verschiebbar geführt ist, der am Fensterrahmen (1) außen auf und ab bewegbar gelagert und über eine Dichtung gegen den Seitenrahmen (6) des Fahrzeugs preßbar ist.

2. Fahrzeugtür nach Anspruch 1, dadurch gekennzeichnet, daß die Dichtung zwischen dem Seitenrahmen (6) und dem Support- Rahmen (2) eine von innen nach außen ansteigende Dichtfläche (46) aufweist.

3. Fahrzeugtür nach Anspruch 1 oder 2, dadurch gekennzeichnet, daß die Dichtfläche (46) durch die Berührungsfläche zwischen einem Dichtprofil (5, 29) an der oberen Kante des Support-Rahmens (2) und einem gegenüberliegenden Dichtprofil (7) an dem Seitenrahmen (6) gebildet wird.

4. Fahrzeugtür nach Anspruch 3, dadurch gekennzeichnet, daß das Dichtprofil an dem Support-Rahmen (2) als Schlauchdichtung (29) ausgebildet ist.

5. Fahrzeugtür nach Anspruch 4, dadurch gekennzeichnet, daß die Schlauchdichtung (29) in der Schließstellung des Support-Rahmens (2) aufblasbar ist.

6. Fahrzeugtür nach Anspruch 4 oder 5, dadurch gekennzeichnet, daß der Fensterrahmen (1) ein an dem Seitenrahmen (6) anliegendes lippenförmiges Dichtprofil (8) aufweist und die Schlauchdichtung (29) mit einem gegen das lippenförmige Dichtprofil (8) des Fensterrahmens (1) drückbaren lippenförmigen Abschnitt (46) versehen ist.

7. Fahrzeugtür nach einem der vorstehenden Ansprüche, dadurch gekennzeichnet, daß die Außenseite des Supportrahmens (2) mit der sich daran anschließenden Kontur des Dachs (4) fluchtet.

8. Fahrzeugtür nach einem der vorstehenden Ansprüche, dadurch gekennzeichnet, daß die Bewegung des Supportrahmens (2) nach unten bei Betätigung des Außen- oder Innentürgriffs ausgelöst wird.

9. Fahrzeugtür nach einem der vorstehenden Ansprüche, dadurch gekennzeichnet, daß die Bewegung des Support-Rahmens (2) nach oben beim Einschnappen des Türschlosses ausgelöst wird.

10. Fahrzeugtür nach einem der vorstehenden Ansprüche, dadurch gekennzeichnet, daß ein elektromechanischer Fensterheber vorgesehen ist und der Support-Rahmen (2) über eine Kupplung durch den Fensterheber betätigbar ist.

11. Fahrzeugtür nach einem der Ansprüche 1 bis 9, dadurch gekennzeichnet, daß der Support-Rahmen (2) gegenüber dem Fensterrahmen (1) nach unten federbelastet und durch die Fensterscheibe (3) betätigbar ist.

12. Fahrzeugtür nach einem der vorstehenden Ansprüche, dadurch gekennzeichnet, daß der Fensterrahmen (1) an der dem Support-Rahmen (2) zugewandten Seite eine Wandung (10) aufweist.

13. Fahrzeugtür nach einem der vorstehenden Ansprüche, dadurch gekennzeichnet, daß zur Lagerung und Führung des Support-Rahmens (2) an dem Fensterrahmen (1) an der dem Fensterrahmen (1) zugewandten Seite des Supportrahmens (2) Führungsbolzen (19) vorgesehen sind, die in Langlöchern (18) geführt sind, die an der dem Support-Rahmen (2) zugewandten Wandung (10) des Fensterrahmens (1) vorgesehen sind.

14. Fahrzeugtür nach Anspruch 13, dadurch gekennzeichnet, daß zur Befestigung des Support-Rahmens (2) an dem Fensterrahmen (1) die Führungsbolzen (19) an ihrem vom Support-Rahmen (2) abgewandten Ende die Langlöcher (18) übergreifen.

15. Fahrzeugtür nach Anspruch 13 oder 14, dadurch gekennzeichnet, daß die Langlöcher (18) mit Gleitelementen (17) verkleidet sind.

16. Fahrzeugtür nach einem der vorstehenden Ansprüche, dadurch gekennzeichnet, daß an der dem Support-Rahmen (2) gegenüberliegenden Kante des Dachs (4) ein elastisches Dachrinnenprofil (28) befestigt ist und sich an der Außenseite vom Support-Rahmen (2) ein Steg (30) nach oben erstreckt, der bei Schließstellung des Supportrahmens (2) das Dachrinnenprofil (28) an das Dach (4) drückt.

17. Fahrzeugtür nach Anspruch 16, dadurch gekennzeichnet, daß das Dachrinnenprofil (28) mit einer Stufe (34) versehen ist, in die der Steg (30) mit seiner oberen Kante (33) in Schließstellung des Supportrahmens (2) eingreift.

18. Fahrzeugtür nach Anspruch 17, dadurch gekennzeichnet, daß die Position der oberen Kante (33) des Stegs (30) in Schließstellung des Support-Rahmens (2) einstellbar ist.

19. Fahrzeugtür nach Anspruch 18, dadurch gekennzeichnet, daß zur Einstellbarkeit der oberen Kante (33) des Stegs (30) ein mit dem Fensterrahmen (1) zusammenwirkender Anschlag (35) vorgesehen ist und der Supportrahmen (2) einen dem Fensterrahmen (1) zugewandten Flansch (13) mit wenigstens einem Langloch (37) aufweist, durch das sich ein Schraubbolzen (36) erstreckt, mit dem der Anschlag (35) festklemmbar ist.

20. Fahrzeugtür nach Anspruch 19, dadurch gekennzeichnet, daß der Flansch (13) im Bereich des Langlochs (37) eine Verzahnung (41) aufweist.

## Claims

1. A vehicle door with a window frame, characterised in that the window (3) is guided for movement in a support frame (2) which is mounted for vertical movement on the outside of the window frame (1) and can be pressed via a seal against the side frame (6) of the vehicle.

2. A vehicle door according to claim 1, characterised in that the seal between the side frame (6) and the support frame (2) has a sealing surface (46) which rises towards the exterior.

3. A vehicle door according to claim 1 or 2, characterised in that the sealing surface (46) is formed by the surface of contact between a sealing section member (5, 29) on the top edge of the support frame (2) and a facing sealing section member (7) on the side frame (6).

4. A vehicle door according to claim 3, characterised in that the sealing section member on the support

EP 0 347 537 B1

frame (2) is in the form of a tubular seal (29).

5. A vehicle door according to claim 4, characterised in that the tubular seal (29) is inflatable when the support frame (2) is in the closed position.

6. A vehicle door according to claim 4 or 5, characterised in that the window frame (1) has a lip-like sealing section member (8) abutting the side frame (6) and the tubular seal (29) has a lip-like portion (46) for pressing against the lip-like member (8) of the window frame (1).

7. A vehicle door according to any of the preceding claims, characterised in that the outside of the support frame (2) is flush with the adjacent contour of the roof (4).

8. A vehicle door according to any of the preceding claims, characterised in that the movement of the support frame (2) downwards is initiated by actuating the outer or inner door-handle.

9. A vehicle door according to any of the preceding claims, characterised in that the movement of the support frame (2) upwards is initiated when the door lock clicks shut.

10. A vehicle door according to any of the preceding claims, characterised in that an electromechanical window-lifter is provided and is adapted to actuate the support frame (2) via a clutch.

11. A vehicle door according to any of claims 1 to 9, characterised in that the support frame (2) is spring-loaded downwards relative to the window frame (1) and is actuated via the window (3).

12. A vehicle door according to any of the preceding claims, characterised in that the window frame (1) has a wall (10) on the side facing the support frame (2).

13. A vehicle door according to any of the preceding claims, characterised in that guide bolts (19) for bearing and guiding the support frame (2) on the window frame (1) are provided on the side of the support frame (2) adjacent the window frame (1) and are guided in slots (18) formed on the wall (10) of the window frame (1) facing the support frame (2).

14. A vehicle door according to claim 13, characterised in that, in order to secure the support frame (2) to the window frame (1), the ends of the guide bolts (19) remote from the support frame (2) extend over the slots (18).

15. A vehicle door according to claim 13 or 14, characterised in that the slots (18) are covered by sliding members (17).

16. A vehicle door according to any of the preceding claims, characterised in that a resilient gutter section member (28) is secured to the edge of the roof (4) opposite the support frame (2) and a web (30) on the outside of the support frame (2) extends upwards and, when the support frame (2) is in the closed position, presses the gutter member (28) against the roof (4).

17. A vehicle door according to claims 16, characterised in that the gutter member (28) has a step (34) into which the upper edge (33) of the web (30) engages when the support frame (2) is in the closed position.

18. A vehicle door according to claim 17, characterised in that the position of the top edge (33) of the web (30) is adjustable when the support frame (2) is in the closed position.

19. A vehicle door according to claim 18, characterised in that an abutment (35) co-operating with the window frame (1) is provided for adjusting the top edge (33) of the web (30), and the support frame (2) has a flange (13) facing the window frame (1) and with at least one slot (37) through which a screw bolt (36) extends for clamping the abutment (35).

20. A vehicle door according to claim 19, characterised in that the flange (13) has teeth (41) in the region of the slot (37).


**Revendications**

1. Portière de véhicule avec encadrement de fenêtre, caractérisée en ce que la vitre de la fenêtre (3) est guidée de façon à coulisser dans un cadre support (2), monté sur l'encadrement de fenêtre (1) à l'extérieur de façon à pouvoir monter et descendre, et peut être comprimé par l'intermédiaire d'un joint d'étanchéité contre le cadre latéral (6) du véhicule.

2. Portière de véhicule selon la revendication 1, caractérisée en ce que le joint d'étanchéité entre le cadre latéral (6) et le cadre support (2) présente une surface d'étanchéité (46) croissante de l'intérieur vers l'extérieur.

3. Portière de véhicule selon la revendication 1 ou 2, caractérisée en ce que la surface d'étanchéité (46) est formée par la surface de contact entre un profilé d'étanchéité (5, 29) sur le bord supérieur du cadre support (2) et un profilé d'étanchéité (7) se trouvant en regard sur le cadre latéral (6).

4. Portière de véhicule selon la revendication 3, caractérisée en ce que le profilé d'étanchéité est formé sur le cadre support (2) comme un joint d'étanchéité (29) en forme de tube.

5. Portière de véhicule selon la revendication 4, caractérisée en ce que le joint d'étanchéité en forme de tube (29) peut être gonflé dans la position de fermeture du cadre support (2).

6

6. Portière de véhicule selon la revendication 4 ou 5, caractérisée en ce que l'encadrement de fenêtre (1) présente un profilé d'étanchéité (8) en forme de lèvres reposant sur le cadre latéral (6) et le joint d'étanchéité (29) en forme de tube est pourvu d'une section (46) en forme de lèvres pouvant être pressée contre le profilé d'étanchéité en forme de lèvres (8) de l'encadrement de fenêtre (1).

7. Portière de véhicule selon l'une des revendications précédentes, caractérisée en ce que le côté extérieur du cadre support (2) s'aligne sur le contour du toit (4) s'y raccordant.

8. Portière de véhicule, selon l'une des revendications précédentes, caractérisée en ce que le déplacement du cadre support (2) est déclenché vers le bas par actionnement de la poignée extérieure ou de la poignée intérieure.

9. Portière de véhicule selon l'une des revendications précédentes, caractérisée en ce que le déplacement du cadre support (2) est déclenché vers le haut par l'enclenchement de la serrure de la portière.

10. Portière de véhicule selon l'une des revendications précédentes, caractérisée en ce qu'il est prévu un lève-glace électromécanique et que le cadre support (2) peut être actionné par l'intermédiaire d'un accouplement par le lève-glace.

11. Portière de véhicule selon l'une des revendications 1 à 9, caractérisée en ce que le cadre support (2) par rapport à l'encadrement de fenêtre (1) est poussé vers le bas par un ressort et peut être actionné par la vitre de la fenêtre (3).

12. Portière de véhicule selon l'une des revendications précédentes, caractérisée en ce que l'encadrement de fenêtre (1) présente une paroi (10) sur le côté tourné vers le cadre support (2).

13. Portière de véhicule selon l'une des revendications précédentes, caractérisée en ce que pour le montage et le guidage du cadre support (2) sur l'encadrement de fenêtre (1), il est prévu sur le côté du cadre support (2) tourné vers l'encadrement de fenêtre (1), des tétons de guidage (19), qui sont guidés dans des trous oblongs (18), qui sont prévus sur la paroi (10) de l'encadrement de fenêtre (1) tournée vers le cadre support (2).

14. Portière de véhicule selon la revendication 13, caractérisée en ce que pour la fixation du cadre support (2) sur l'encadrement de fenêtre (1), les tétons de guidage (19) recouvrent à leurs extrémités tournées à l'opposé du cadre support (2), les trous oblongs (18).

15. Portière de véhicule selon la revendication 13 ou 14, caractérisée en ce que les trous oblongs (18) sont habillés d'éléments de glissement (17).

16. Portière de véhicule selon l'une des revendications précédentes, caractérisée en ce que sur le bord du toit (4) situé en regard du cadre support (2) est fixé un profilé de gouttière de toit (28) élastique et en ce qu'une aile (30) s'étend vers le haut sur le côté extérieur du cadre support (2), aile qui, dans la position de fermeture du cadre support (2), presse le profilé de gouttière de toit (28) sur le toit (4).

17. Portière de véhicule selon la revendication 16, caractérisée en ce que le profilé de gouttière de toit (28) est pourvu d'un gradin (34) dans lequel vient en prise l'aile (30) par son bord supérieur (33) dans la position de fermeture du cadre support (2).

18. Portière de voiture selon la revendication 17, caractérisée en ce que la position du bord supérieur (33) de l'âme (30) peut être réglée, dans la position de fermeture du cadre support (2).

19. Portière de véhicule selon la revendication 18, caractérisée en ce que pour pouvoir régler le bord supérieur (33) de l'aile (30), il est prévu une butée (35) coopérant avec l'encadrement de fenêtre (1) et le cadre support (2) présente un flanc (13) tourné vers l'encadrement de fenêtre (1) avec au moins un trou oblong (37), à travers lequel s'étend un boulon fileté (36) avec lequel la butée (35) peut être solidement serrée.

20. Portière de véhicule selon la revendication 19, caractérisée en ce que le flanc (13) présente un crantage (41) dans la zone du trou longitudinal (37).

FIG.1

FIG.2

FIG. 3

FIG. 4

10

FIG. 5

FIG. 6

FIG. 7

FIG. 8

FIG. 9

FIG. 10

FIG. 13

FIG. 11

FIG. 12